# EUROPEAN PATENT SPECIFICATION

(11) **EP 1 743 853 B1**
(45) Date of publication and mention of the grant of the patent: **08.10.2008**
(21) Application number: 05106291.7
(22) Date of filing: 11.07.2005
(51) Int. Cl.: B65G 25/02, B65B 43/30

(54) **Transfer device for packaging machines**
Übertragungsvorrichtung für Verpackungsmaschinen
Dispositif de transfert pour les machines d'emballage

(43) Date of publication of application: 17.01.2007
(73) Proprietor: BOSSAR, S.L., 08210 Barbera del Vallès (ES)
(72) Inventor: Quetin, Arnaud, 08037, Barcelona (ES); Fonte, Josep, 08192, Sant Quirze del Vallès (ES)
(74) Representative: Barlocci, Anna

(56) References cited:
- US-A- 3 446 121
- US-B1- 6 371 277

## Description

The present invention relates to a transfer device for packaging machines in which packages, such as for example bags, sachets and the like, are advanced through the stations in a machine according to the preamble of claim 1. The invention also refers to a packaging machine including such a transfer device.

### BACKGROUND OF THE INVENTION

Packaging machines are known for automatically and continuously forming and filling pouch, sachet or bag-like packages made from a continuous film strip coming from a feeding station. Said machines are provided with other several stations fitted on a frame through which the film is advanced, for example a cutting station for cutting the film into single packages. A transfer device is also provided for conveying the packages, once they have been cut into individual packages, during their journey through the successive stations in the machine.

Known transfer devices for packaging machines, such as the one disclosed in ES2156563, comprise two, or even more, sliding members arranged substantially parallel to each other. Between the sliding members, single packages are arranged which are advanced due to the longitudinal movement of said sliding members relative to guide members which are fixed to the machine frame by means of support posts or arms. There are also provided driving means for moving said guide members towards and away from each other for gripping and releasing the packages before and after the longitudinal movement of the sliding members.

Operation of the transfer device consists in approaching the guide members, and therefore the sliding members to each other for gripping the packages, then longitudinally advancing the elongate members relative to the frame and then moving the sliding members away from each other for releasing the packages.

As outlined above, there are provided driving means for causing the to-and-fro movement of the guide members. Said driving means act on arms having a first, pivotable lower end and a second, opposed upper end hingedly attached to guide members. As the arms of at least one sliding member are caused to pivot, the longitudinal guide members are moved towards and away from each other for gripping and releasing the package arranged between them.

The sliding members may be further slid relative to the guide members by means by, for example, a series of rollers disposed between the sliding members and the guide members. As the rollers are rotated, the sliding members are caused to move longitudinally relative to the guide members for advancing the packages arranged between said sliding members.

One of the main disadvantages of said prior art transfer devices is that, due to contact between parts (the sliding member, the elongate member, the rollers, etc.) in operation, wear and dust particles as well as other undesirable material may result. This becomes a serious problem in the case the transfer device is fitted in an aseptic packaging machine where cleaning and hygiene conditions must be ensured. Dust and dirt particles in the transfer device resulting from the movement of the sliding member on the elongate member involve intervention of the operator who has to stop the machine and clean it.

A further disadvantage of the prior art transfer devices is that it is necessary two elongate members and two mutually pivotable sliding members for each elongate member may be provided so that the packets may be suitably held and transported through the machine.

US3446121 refers to an apparatus for opening the ends of tube sections of plastic material sheeting which is to be processed into bags. The tube sections are transported through substantially parallel beams that perform a single reciprocating movement by being driven by rotary links. Said links are rotated in a plane containing the advance direction of the beams.

### DESCRIPTION OF THE INVENTION

The present invention provides a transfer device for packaging machines which has been found that overcomes or at least partly reduces the above disadvantages related to prior art transfer devices, and is according to claim 1.

The invention also refers to a packaging machine, such as a horizontal packaging machine for forming and filling packages of film material which includes said transfer device.

A transfer device for packaging machines is herein provided intended for transporting packages from one working station to another station in the machine. The transfer device of the invention comprises at least two elongate members substantially parallel to each other for gripping packages disposed between them. The elongate members are arranged to perform a reciprocating movement defining an advance travel. Said reciprocating movement is performed in an advance direction causing the packages to be transported from one station to another in the machine.

The elongate members are mounted on supporting members which can oscillate in a first plane which contains the advance direction of the elongate members whereby the oscillation of the supporting members in said first plane causes said reciprocating movement of the elongate members.

In the transfer device of the invention, at least some of said supporting members can oscillate in a second plane. Said second plane forms an angle with respect to said first plane in such a way that the oscillation of said supporting members in said second plane causes a reciprocating movement of at least one of the elongate members towards and away from another elongate member, for gripping and releasing packages between the two elongate members. Said second plane may be, for example, at right angles to the first plane.

Therefore, the transfer device of the invention eliminates the need for rollers as used in prior art machines for driving the sliding members relative to the guide members. Sliding and therefore frictional contact between parts such as the elongate members and the guide members is avoided with the invention and therefore no particles resulting from wear, dirt or dust are produced and aseptic conditions are thus ensured in the machine.

According to a further embodiment, each elongate member is supported on at least two of said supporting members, arranged such that said at least two supporting members of each elongate member oscillate in a synchronized manner. The supporting members may be arms hinged by their ends to the elongate member and to the machine frame respectively.

Still in some embodiments, the supporting arms may be extendable, that is, they are allowed to extend and retract during oscillation; for example they can be telescopic or any other sliding system.

In one embodiments, at least some supporting arms may comprise an outer cylinder hinged to the machine frame and an inner shaft slidingly received in the outer cylinder and hinged at one end to the elongate member.

In this respect, the inner shaft may have an end opposite the end hinged to the elongate member that is associated to a groove which defines a cam surface such that during the oscillation of the supporting arm the inner shaft is displaced along the outer cylinder. The inner shaft is thus allowed to slide relative to the outer cylinder as they are rotated.

The elongate members may comprise means for gripping between them at least one package made from a flexible film material.

### BRIEF DESCRIPTION OF THE DRAWINGS

A particular embodiment of a transfer device according to the present invention will be described in the following, only by way of non-limiting example, with reference to the appended drawings, in which:
Fig. 1 is a perspective view of one embodiment of a transfer device for a packaging machine according to the invention;
Fig. 2 is a front view of the transfer device in figure 1 in which two positions of the supporting arms are shown;
Fig. 3 is a detail front view of one driving unit of the transfer device; and
Fig. 4 is a side sectional view of the transfer device in figure 1.

### DESCRIPTION OF EMBODIMENTS

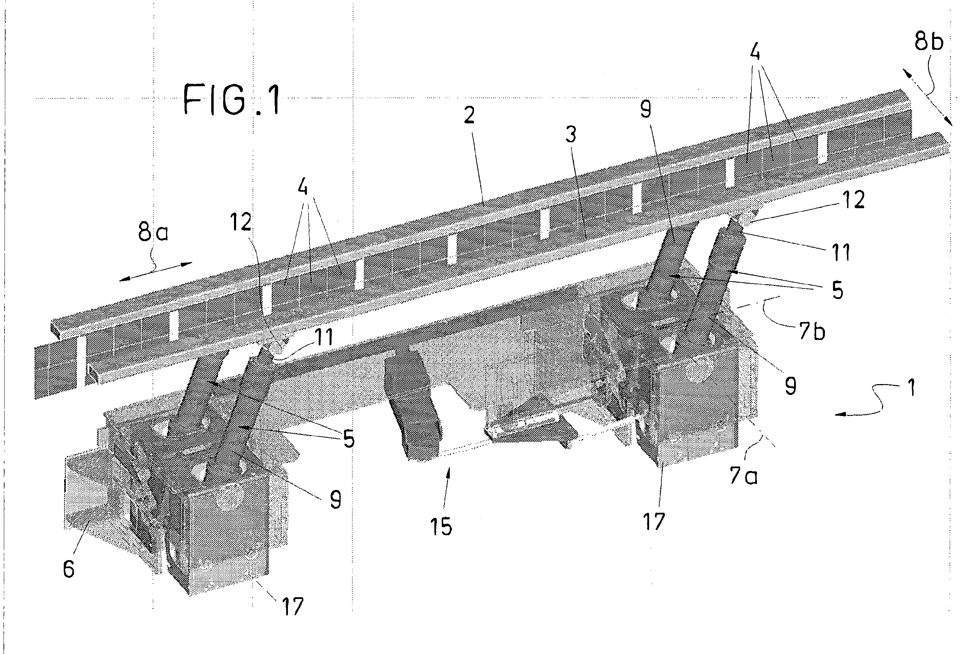

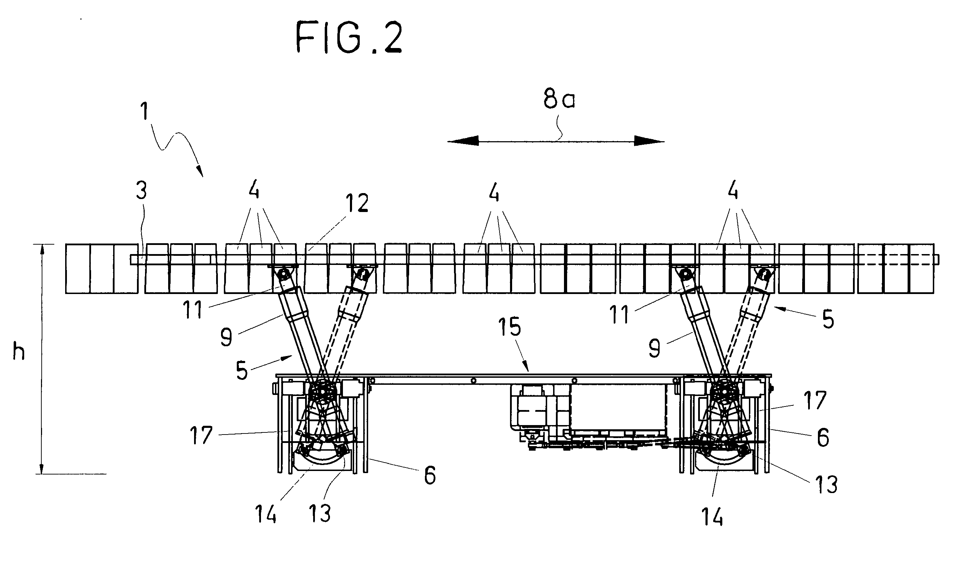

Figures 1 and 2 show a transfer device indicated as a whole with reference numeral 1. The transfer device 1 is part of a packaging machine (only shown the frame 6 thereof in the figures).

The transfer device 1 serves the purpose of transporting packages 4 from one station to another station in said packaging machine. For example, packages may be picked once they have been already cut into individual bag-like packages 4 from a film strip and they are advanced to another station in the machine, for example a welding station.

In the embodiment shown, the transfer device 1 comprises two elongate members 2, 3 which are arranged parallel to each other. The elongate members 2, 3 are each made from a single piece, with no moving parts. The example shown in the figures correspond to rectangular shaped cross-section hollow members, although other shaped could be used. In this respect, other preferred shapes for the hollow member cross-section could be, for example, circular, elliptical, polygonal or mixed polygonal-circular. Specially preferred cross-section shapes are circular for cleaning purposes. An example of mixed configuration could be a rectangular shape having a substantially convex upper surface.

Said two elongate members 2, 3 grip the packages 4 which are arranged between them and make them to be advanced by performing a reciprocating movement in an advance direction 8a. In this way, packages 4 are transported from one station to another in the machine.

The transfer device 1 further comprises supporting members 5 on which the elongate members 2, 3 are mounted. The supporting members 5 can oscillate in a first plane containing said advance direction 8a of the elongate members 2, 3. The oscillation of the supporting members 5 in said first plane, that is, around an axis 7a, causes said reciprocating movement of the elongate members 2, 3 and therefore the advancement of the packages 4 relative to the machine frame 6.

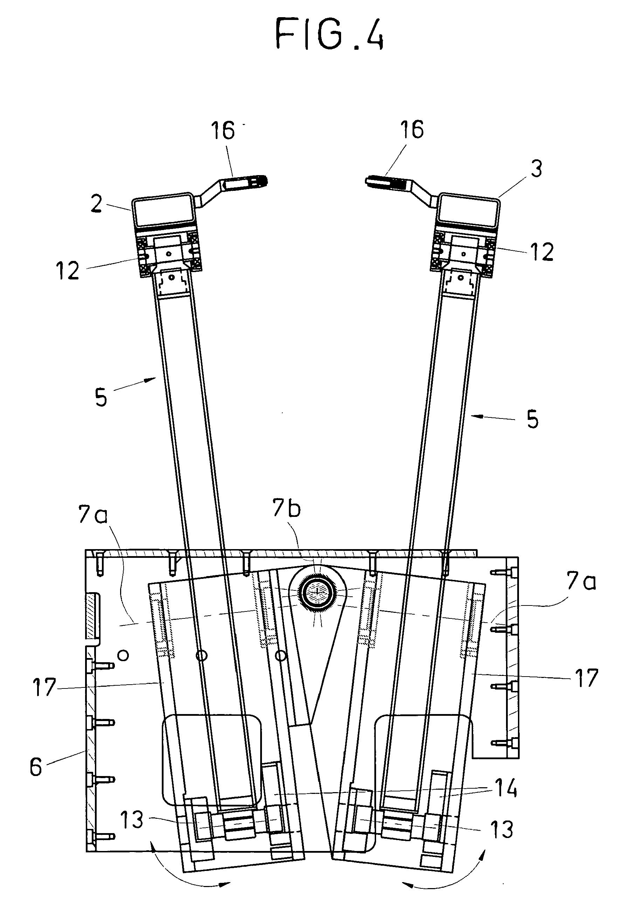

As shown in Fig. 4, the supporting members 5 are provided with a corresponding lower base block 17 which may be rotated relative the machine frame 6 around a longitudinal common axis 7b. Therefore, the supporting members 5 can further oscillate in a second plane that is at an angle (such as 90°) with respect to said first plane, that is, in the direction shown by arrow 8b in Fig. 1. The oscillation of the supporting members 5, as well as the corresponding lower base blocks 17, in said second plane around the longitudinal axis 7b, causes a reciprocating movement of at least one of the elongate members 2, 3 towards and away from another elongate member, for gripping and releasing packages 4 between the two elongate members 2, 3.

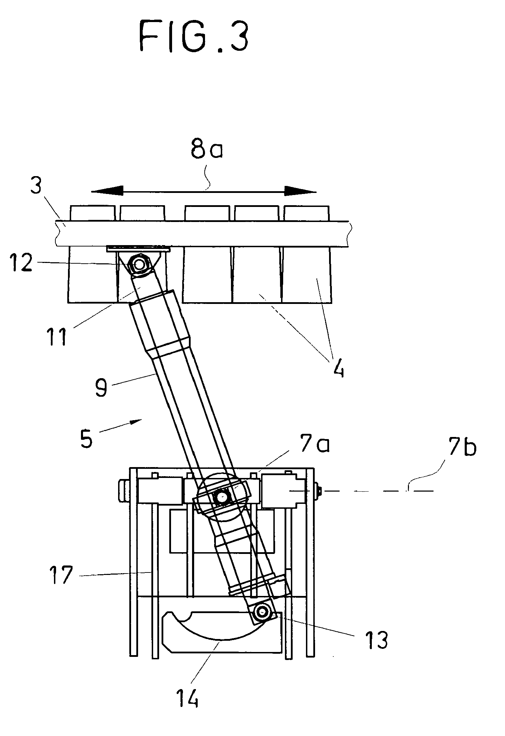

In the embodiment shown in Figs. 3 the elongate members 2, 3 are each supported on two supporting members 5. At least one of said two supporting members 5 in each elongate member 2, 3 oscillate in a synchronized manner and, as stated above, around said geometrical axes 7a, 7b.

The supporting members 5 in said embodiments are arms hinged by their respective ends 12, 13 to the elongate member 2, 3 and to the base blocks 17 respectively.

Said supporting arms 5 may be extendable, for example telescopic, so that they are allowed to extend and retract during oscillation.

In one example of the invention, and such as it may be seen in the enlarged view of Fig. 3, at least some supporting arms 5 comprise an outer cylinder 9 that is hinged to the machine frame 6 through a shaft 7b around which the base blocks 17 can oscillate and an inner shaft 11. The inner shaft 11 is slidingly received in the outer cylinder 9 and hinged at its upper end 12 to the respective elongate member 2, 3. The inner shaft 11 of each supporting arm 5 has an opposite lower end 13 that is associated to a groove formed within the respective base block 17. Said grove defines a cam surface 14 inside of which said lower end 13 of the inner shaft 11 may slid. During the oscillation of the supporting arm 5, the inner shaft 11 is displaced along the outer cylinder 9 as the lower end 13 follows the cam surface 14 which curvature is different from that of the outer cylinder 9 when rotating around axis 7a. As a consequence, the elongate members 2, 3 may be at a suitable height h when driven. Height h may be constant if required.

As shown in Fig. 2, each assembly formed of one elongate member and the two corresponding supporting arms 5 defines an articulated parallelogram. Therefore, in the embodiment shown, the transfer device 1 comprises two of such articulated parallelograms arranged and operated in parallel.

The transfer device 1 has driving means 15 acting on said supporting arms 5 for driving the corresponding elongate members 2, 3.

The elongate members 2, 3 may comprise means for gripping between them at least one package 4 made from a flexible film material. Said gripping means may be, for example, grippers or pivots 16, as shown in Fig. 4, extending perpendicularly to one another for holding the packages 4. Packages 4 may be held between the respective free ends of the elongate members 2, 3 in series of, for example, three packages 4, as shown in Fig. 2.

Although, as stated above, the supporting arms 5 can oscillate in a second plane, in a transverse direction 8b, causing the reciprocating movement of the elongate members 2, 3 for gripping and releasing packages 4 between them, it will be understood that an alternative embodiment could be provided in which the supporting arms 5 only oscillate around the transverse axis 7a, that is, in said first plane, and the gripping means 16 in the respective elongate members 2, 3 move to and away from each other for gripping the packages 4.

On the other hand, it will be apparent that although the transfer device 1 shown in the drawings is for advancing series of three packages, it will be understood that any other amount of packages could be arranged in series in the transfer device 1.

Reference has been made in the present specification to packages, which term has to be interpreted widely, although specifically intended, in the preferred embodiment shown, to pouch, sachet or bag-like packages from a film strip made of any suitable material.

## Claims

1. A transfer devise for packaging machines in which packages (4) are transported from one working station to another, said transfer device comprising at least two elongate members (2, 3) substantially parallel to each other, intented to grip packages (4) between them and arranged to perform a reciprocating movement comprising an advance travel in an advance direction (8a) for transporting packages (4) from one station to another, said elongate members (2, 3) being mounted on supporting members (5) which can oscillate in a first plane containing said advance direction (8a) of the elongate members (2, 3), whereby the oscillation of the supporting members (5) in said plane causes said reciprocating movement of the elongate members (2, 3),
**characterized in that** at least some of said supporting members (5) can oscillate in a second plane at an angle with respect to said first plane, whereby the oscillation of said supporting members (5) in said second plane causes a reciprocating movement of at least one of the elongate members (2, 3) towards and from another elongate member, for gripping and releasing packages (4) between the two elongate members (2, 3).

2. A transfer device as claimed in claim 1, **characterized in that** said second plane is at right angles to said first plane.

3. A transfer device as claimed in claim 1 or claim 2, **characterized in that** each elongate member (2, 3) is supported on at least two of said supporting members (5), arranged such that said at least two supporting members (5) of each elongate member (2, 3) oscillate in synchronized manner.

4. A transfer device as claimed in any of the preceding claims, **characterized in that** said supporting arms (5) are extendable.

5. A transfer device as claimed in claim 4, **characterized in that** at least some supporting arms (5) comprise an outer cylinder (9) hinged to the machine frame (6) and an inner shaft (11) slidingly received in the outer cylinder (9) and hinged at one end (12) to the elongate member (2, 3).

6. A transfer device as claimed in claim 5, **characterized in that** said inner shaft (11) has an end (13) opposite the end (12) hinged to the elongate member (2, 3) that is associated to a groove forming a cam surface (14) such that during the oscillation of the supporting arm (5) the inner shaft (11) is displaced along the outer cylinder (9).

7. Packaging machine comprising a transfer device (1) as claimed in any of the preceding claims.

8. Packaging as claimed in claim 7, **characterized in that** it is a horizontal packaging machine for forming and filling packages (4) of film material.

## Patentansprüche

1. Eine Transfervorrichtung für Verpackungsmaschinen, in denen Pakete (4) von einer Arbeitsstation zu einer anderen transportiert werden, wobei die besagte Transfervorrichtung mindestens zwei verlängerte Elemente (2, 3) umfasst, die im Wesentlichen parallel zueinander verlaufen, welche dazu bestimmt sind, Pakete (4) zwischen diesen zu greifen, und dazu angeordnet sind, eine Hin- und Her-Bewegung auszuführen, die eine Vormarschbewegung in einer Vorwärtsrichtung (8a) für den Transport von Paketen (4) von einer Station zur anderen umfasst, wobei die besagten verlängerten Elemente (2, 3) auf Trägerelementen (5) montiert sind, die auf einer ersten Ebene oszillieren können, welche die besagte Vorwärtsrichtung (8a) der verlängerten Elemente (2, 3) enthält, wodurch die Oszillation der Trägerelemente (5) auf der besagten ersten Ebene die besagte Hin- und Her-Bewegung der verlängerten Elemente (2, 3) verursacht, **dadurch gekennzeichnet, dass** mindestens einige der besagten Trägerelemente (5) auf einer zweiten Ebene in einem Winkel gegenüber der besagten ersten Ebene oszillieren können, wodurch die Oszillation der besagten Trägerelemente (5) auf der besagten zweiten Ebene eine Hin- und Her-Bewegung von mindestens einem der verlängerten Elemente (2, 3) zu einem anderen verlängerten Element hin oder von diesem weg verursacht, zum Greifen und zur Freisetzung von Paketen (4) zwischen den beiden verlängerten Elementen (2, 3).

2. Eine Transfervorrichtung nach Anspruch 1, **dadurch gekennzeichnet, dass** die besagte zweite Ebene in rechten Winkeln zu der besagten ersten Ebene verläuft.

3. Eine Transfervorrichtung nach Anspruch 1 oder Anspruch 2, **dadurch gekennzeichnet, dass** jedes verlängerte Element (2, 3) auf mindestens zwei der besagten Trägerelemente (5) gestützt ist, die so angeordnet sind, dass die besagten mindestens zwei Trägerelemente (5) jedes verlängerten Elements (2, 3) auf synchronisierte Art und Weise oszillieren.

4. Eine Transfervorrichtung nach irgendeinem der vorherigen Ansprüche, **dadurch gekennzeichnet, dass** die besagten Trägerarme (5) ausziehbar sind.

5. Eine Transfervorrichtung nach Anspruch 4, **dadurch gekennzeichnet, dass** mindestens einige Trägerarme (5) einen äußeren Zylinder (9), der drehbar an dem Maschinenrahmen (6) angebracht ist, und einen inneren Kolben (11) umfassen, die gleitbar in dem äußeren Zylinder (9) aufgenommen und an einem Ende (12) drehbar an dem verlängerten Element (2, 3) angebracht ist.

6. Eine Transfervorrichtung nach Anspruch 5, **dadurch gekennzeichnet, dass** den besagten inneren Kolben (11) ein Ende (13) gegenüber dem drehbar an dem verlängerten Element (2, 3) angebrachten Ende (12) besitzt, das mit einer Nut verbunden ist, die eine Kurvenoberfläche (14) bildet, so dass während der Oszillation des Trägerarms (5) die innere Achse (11) entlang des äußeren Zylinders (9) verschoben wird.

7. Eine Verpackungsmaschine, die eine Transfervorrichtung (1) nach irgendeinem der vorherigen Ansprüche umfasst.

8. Eine Verpackungsmaschine nach Anspruch 7, **dadurch gekennzeichnet, dass** diese eine horizontale Verpackungsmaschine zur Formung und Befüllung von Paketen (4) aus Folienmaterial ist.

## Revendications

1. Un dispositif de transfert pour machines d'emballage dans lequel les emballages (4) sont transportés d'un poste de travail à un autre, ledit dispositif de transfert comprenant au moins deux organes allongés (2, 3) substantiellement parallèles l'un par rapport à l'autre, prévus pour saisir entre eux les bagages (4) et disposés pour exécuter un mouvement réciproque comprenant un déplacement en avant dans le sens de progression (8a) pour transporter des bagages (4) d'un poste vers un autre, lesdits organes allongés (2, 3) étant montés sur des organes de support (5) qui peuvent osciller sur un premier plan contenant ledit sens de progression (8a) des organes allongés (2, 3), moyen par lequel l'oscillation des organes de support (5) dans ledit premier plan provoque ledit mouvement réciproque des organes allongés (2, 3), **caractérisé en ce que** quelques-uns desdits organes de support (5) au moins peuvent osciller dans un second plan à l'angle par rapport audit premier plan, moyen par lequel l'oscillation desdits organes de support (5) dans ledit second plan provoque un mouvement réciproque de l'un au moins des organes allongés (2, 3) en direction et à l'écart d'un autre organe allongé, pour saisir et relâcher les bagages (4) entre les deux organes allongés (2, 3).

2. Un dispositif de transfert tel qu'il est revendiqué dans la revendication 1, **caractérisé en ce que** ledit second plan est à angle droit par rapport audit premier plan.

3. Un dispositif de transfert tel qu'il est revendiqué dans la revendication 1 ou la revendication 2, **caractérisé en ce que** chaque organe allongé (2, 3) repose sur au moins deux desdits organes de support (5), disposés de telle manière que lesdits deux organes de support (5) au moins de chaque organe allongé (2, 3) oscillent de façon synchronisée.

4. Un dispositif de transfert tel qu'il est revendiqué dans n'importe laquelle des revendications précédentes, **caractérisé en ce que** lesdits bras de support (5) sont extensibles.

5. Un dispositif de transfert tel qu'il est revendiqué dans la revendication 4, **caractérisé en ce que** quelques bras de support (5) au moins comprennent un cylindre externe (9) articulé au bâti de la machine (6) et un piston interne (11) coulissant pour être reçu dans le cylindre externe (9) et articulé à une extrémité (12) à l'organe allongé (2, 3).

6. Un dispositif de transfert tel qu'il est revendiqué dans la revendication 5, **caractérisé en ce que** ledit piston interne (11) possède une extrémité (13) opposée à l'extrémité (12) articulée à l'organe allongé (2, 3) qui est associé à une rainure formant une surface de came (14) de telle façon que durant l'oscillation du bras de support (5) l'axe interne (11) est déplacé le long du cylindre externe (9).

7. Machine d'emballage comprenant un dispositif de transfert (1) tel qu'il est revendiqué dans n'importe laquelle des revendications précédentes.

8. Machine d'emballage telle qu'elle est revendiquée dans la revendication 7, **caractérisée en ce qu'**il s'agit d'une machine d'emballage horizontale pour former et remplir des emballages (4) faits d'une pellicule de conditionnement.
